# EUROPÄISCHE PATENTSCHRIFT

(11) **EP 1 925 061 B1**
(45) Veröffentlichungstag und Bekanntmachung des Hinweises auf die Patenterteilung: **23.12.2009**
(21) Anmeldenummer: 06791780.7
(22) Anmeldetag: 01.09.2006
(51) Int. Cl.: H02G 15/007, H02G 15/013

(54) **VORRICHTUNG ZUR ABFANGUNG VON KABELN**
DEVICE FOR CLAMPING CABLES
DISPOSITIF PERMETTANT DE TENIR DES CABLES

(30) Priorität: 16.09.2005 DE 202005014677 U
(43) Veröffentlichungstag der Anmeldung: 28.05.2008
(73) Patentinhaber: CCS Technology, Inc., Wilmington, DE 19803 (US)
(72) Erfinder: KNORR, Jens, 58791 Werdohl (DE); MÜLLER, Thorsten, 58708 Menden (DE); EICHSTÄDT, Andreas, 58675 Hemmer (DE)
(74) Vertreter: Sturm, Christoph
(86) Internationale Anmeldenummer: PCT/EP2006/008552
(87) Internationale Veröffentlichungsnummer: WO 2007/033753

(56) Entgegenhaltungen:
- WO-A-00/04618
- WO-A-90/05401
- WO-A-2005/020400

## Beschreibung

Die Erfindung betrifft eine Vorrichtung zur Abfangung von Kabeln.

Beim Aufbau von Lichtwellenleiterkabelnetzen ist es erforderlich, sogenannte Verbindungsstellen bzw. Abzweigstellen für Kabel vorzusehen, wobei an den Verbindungsstellen bzw. Abzweigstellen Spleiße zwischen in den Kabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Kabel über einen Dichtkörper einer Kabelmuffe in die Kabelmuffe eingeführt werden. Die Kabel bzw. Bündeladern von in den Kabeln geführten Lichtwellenleitem werden außerhalb bzw. innerhalb der Kabelmuffe gegenüber einer Zugbeanspruchung sowie gegebenenfalls auch Torsionsbeanspruchung und Biegebeanspruchung abgefangen, wobei hierzu spezielle Abfangvorrichtungen dienen. Die hier vorliegende Erfindung betrifft eine Vorrichtung zur Abfangung von Kabeln im Bereich eines Dichtkörpers einer Kabelmuffe, vorzugsweise außerhalb eines von der Kabelmuffe begrenzten Innenraums. Derartige Vorrichtungen sind aus WO 00/04618, WO 2005/020400 oder WO 90/05401 bekannt.

Der hier vorliegenden Erfindung liegt das Problem zu Grunde, eine neuartige Vorrichtung zur Abfangung von Kabeln zu schaffen. Dieses Problem wird durch eine Vorrichtung gemäß Anspruch 1 gelöst.

Die erfindungsgemäße Vorrichtung verfügt über ein Montageteil und ein Schieberteil, wobei das Montageteil über Montagefüße an einem Dichtkörper einer Kabelmuffe derart befestigbar ist, dass eine Radialposition und/oder eine Umfangsposition des Montageteils am Dichtkörper innerhalb vorgegebener Grenzen einstellbar ist, wobei das Schieberteil am Montageteil derart formschlüssig geführt ist, dass das Schieberteil bei am Dichtkörper montiertem Montageteil innerhalb vorgegebener Grenzen translatorisch verschiebbar ist, und wobei sowohl das Montageteil als auch das Schieberteil jeweils einen Aufnahmeabschnitt zur Abfangung jeweils mindestens eines Kabels aufweisen.

An der erfindungsgemäßen Vorrichtung können gleichzeitig mehrere Kabel gegenüber einer Zugbeanspruchung, Torsionsbeanspruchung sowie Beigebeanspruchung abgefangen werden, wobei die erfindungsgemäße Vorrichtung an unterschiedliche Kabeldurchmesser der abzufangenden Kabel angepasst werden kann. Zur Anpassung an die Kabeldurchmesser der abzufangenden Kabel kann einerseits das Montageteil innerhalb gewisser Grenzen in seiner Radialposition sowie Umfangsposition relativ zum Dichtkörper der Kabelmuffe ausgerichtet werden, andererseits kann das Schieberteil gegenüber dem Montageteil translatorisch sowie vorzugsweise stufenlos verschoben werden. Hierdurch ist bei einfachem konstruktiven Aufwand eine Anpassung der erfindungsgemäßen Abfangvorrichtung an unterschiedliche Kabeldurchmesser mehrerer abzufangender Kabel möglich.

Vorzugsweise sind in die Montagefüße des Montageteils Langlöcher integriert, durch die sich zur Befestigung des Montageteils am Dichtkörper der Kabelmuffe Befestigungsmittel erstrecken, wobei die Langlöcher innerhalb vorgegebener Grenzen eine Ausrichtung des Montageteils in Radialrichtung und/oder in Umfangsrichtung bei der Befestigung desselben am Dichtkörper der Kabelmuffe ermöglichen. Das Schieberteil ist vorzugsweise am Montageteil derart formschlüssig geführt, dass das Schieberteil gegenüber dem Montageteil innerhalb vorgegebener Grenzen ausschließlich translatorisch verschiebbar ist, jedoch gegenüber dem Montageteil gegen Verkippen gesichert ist.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine perspektivische Ansicht einer erfindungsgemäßen Vorrichtung zur Abfangung von Kabeln zusammen mit einer Kabelmuffe und vier an der erfindungsgemäßen Vorrichtung abgefangenen Kabeln;
- Fig. 2:: die erfindungsgemäße Vorrichtung zur Abfangung von Kabeln in perspektivischer Alleindarstellung in einer ersten Position;
- Fig. 3:: die Vorrichtung der Fig. 2 in einer zweiten Position;
- Fig. 4:: die Vorrichtung der Fig. 2 in Vorderansicht;
- Fig. 5:: die Vorrichtung der Fig. 2 in Draufsicht;
- Fig. 6:: die Vorrichtung der Fig. 2 in Seitenansicht;
- Fig. 7:: ein erstes Einzelteil der erfindungsgemäßen Vorrichtung zur Abfangung von Kabeln in perspektivischer Ansicht;
- Fig. 8:: das Einzelteil der Fig. 7 in Vorderansicht;
- Fig. 9:: das Einzelteil der Fig. 7 in Draufsicht;
- Fig. 10:: ein zweites Einzelteil der erfindungsgemäßen Vorrichtung zur Abfangung von Kabeln in perspektivischer Ansicht;
- Fig. 11:: das Einzelteil der Fig. 10 in Vorderansicht;
- Fig. 12:: das Einzelteil der Fig. 10 in Draufsicht;

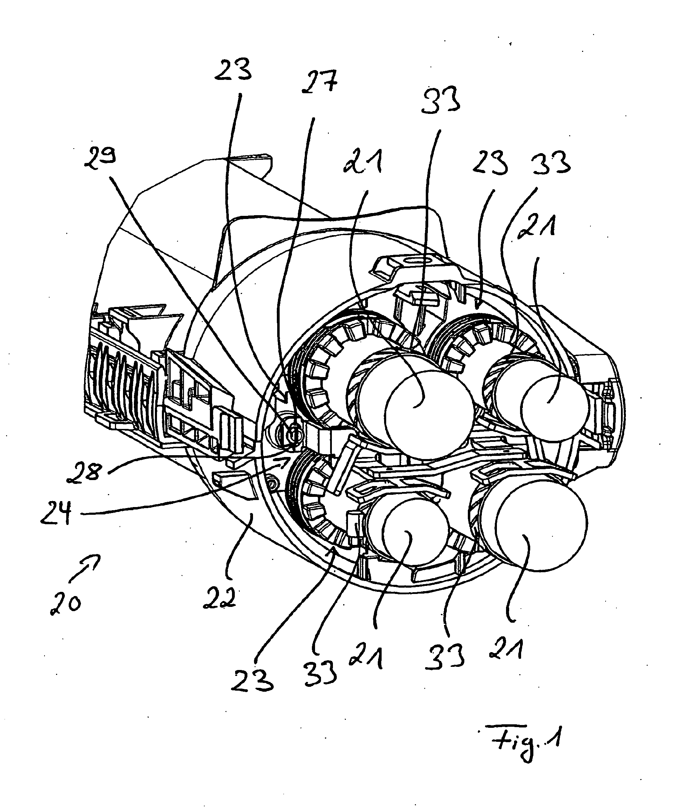

Nachfolgend wird die Erfindung unter Bezugnahme auf Fig. 1 bis 12 in größerem Detail beschrieben.

Fig. 1 zeigt eine Kabelmuffe 20 zusammen mit vier in die Kabelmuffe 20 eingeführten Kabeln 21. Die Kabel 21 sind im Bereich eines Dichtkörpers 22 der Kabelmuffe 20 in einen von der Kabelmuffe 20 definierten Hohlraum bzw. Innenraum eingeführt, um innerhalb des Hohlraums Spleiße zwischen in den Kabeln 21 geführten Lichtwellenleitern abzulegen. Der von der Kabelmuffe 20 definierte Hohlraum ist in Fig. 1 nicht gezeigt, vielmehr zeigt Fig. 1 die Kabelmuffe 20 zusammen mit den Kabeln 21 in montiertem Zustand von außen. In Fig. 1 sind demnach außerhalb der Kabelmuffe 20 verlaufende Abschnitte der Kabel 21 gezeigt.

Die Kabel 21 durchdringen den Dichtkörper 22 der Kabelmuffe 20 im Bereich von an die Durchmesser der in die Kabelmuffe 20 einzuführenden Kabel 21 anpassbaren Einführabschnitten 23.

Die in die Kabelmuffe 20 einzuführenden Kabel 21 werden im Bereich des Dichtkörpers 22 außerhalb des von der Kabelmuffe 20 definierten Hohlraums, in welchem Spleiße zwischen von in den Kabeln 21 geführten Lichtwellenleitern abgelegt werden, mit Hilfe einer erfindungsgemäßen Abfangvorrichtung 24 gegenüber Zugbeanspruchung, Torsionsbeanspruchung sowie Biegebeanspruchung abgefangen. Im bevorzugten Ausführungsbeispiel werden an der erfindungsgemäßen Abfangvorrichtung 24 alle vier in die Kabelmuffe 20 einzuführenden Kabel 21 abgefangen, wobei die erfindungsgemäße Abfangvorrichtung 24 hierbei an die jeweiligen Durchmesser der abzufangenden Kabel angepasst werden kann.

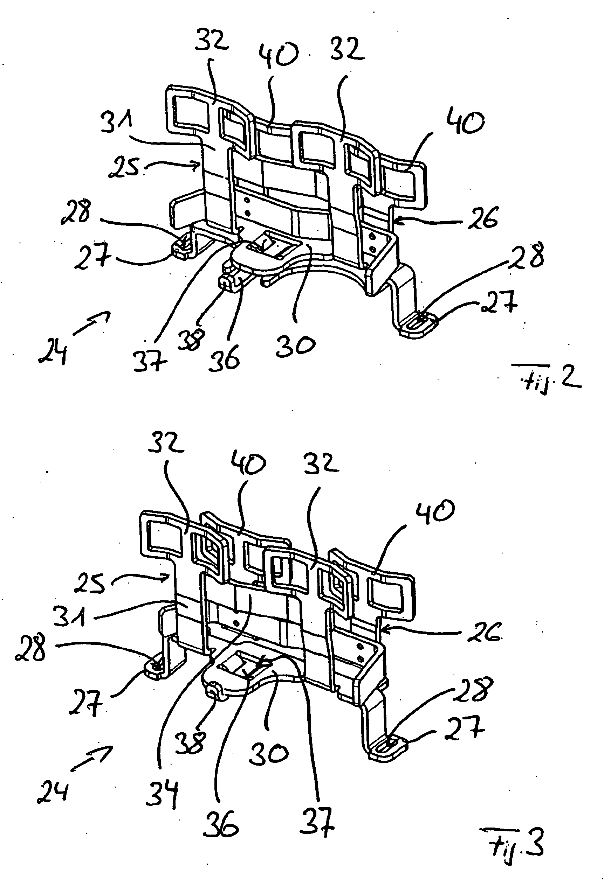

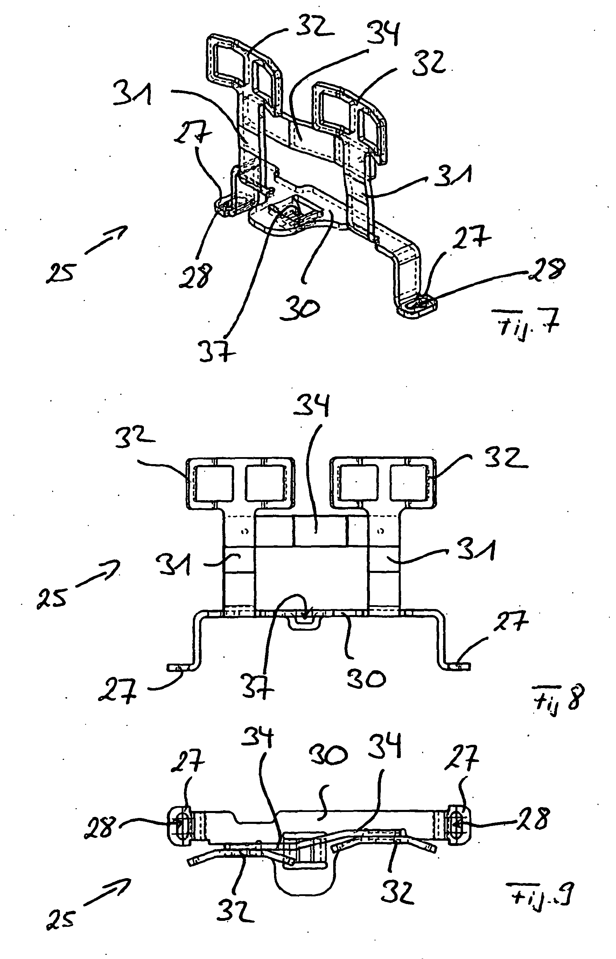

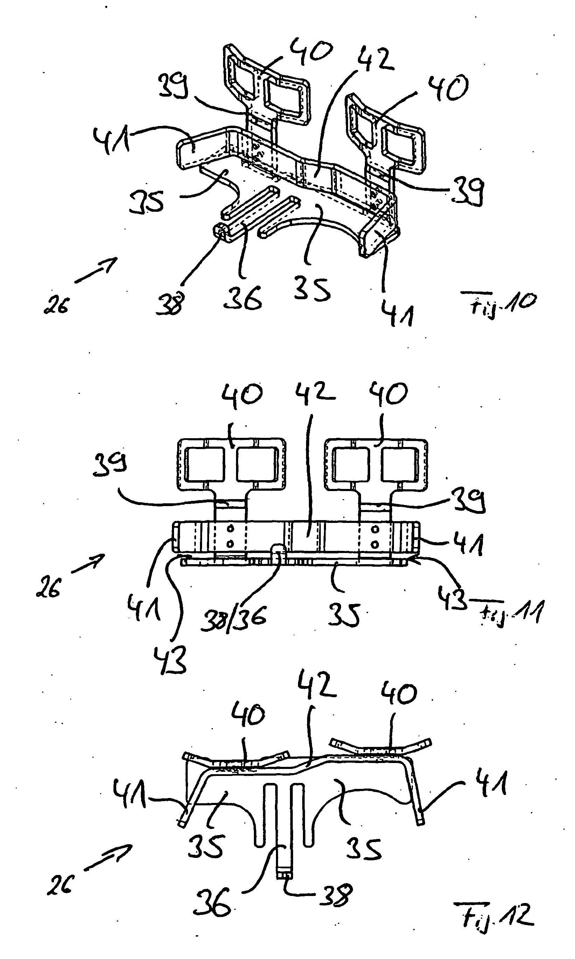

Die erfindungsgemäße Abfangvorrichtung 24 (siehe Fig. 2 bis 6) besteht aus einem Montageteil 25 (siehe Fig. 7 bis 9) und einem Schieberteil 26 (siehe Fig. 10 bis 12).

Das Montageteil 25 der erfindungsgemäßen Abfangvorrichtung 24 verfügt über Montagefüße 27, über welche das Montageteil 25 am Dichtkörper 22 der Kabelmuffe 20 befestigt werden kann. In die Montagefüße 27 sind Langlöcher 28 integriert, durch die sich zur Befestigung des Montageteils 25 am Dichtkörper 22 der Kabelmuffe 20 im gezeigten Ausführungsbeispiel als Schrauben ausgebildete Befestigungsmittel 29 erstrecken (siehe Fig. 1). Bedingt durch die Langlöcher 28 innerhalb der Montagefüße 27 ist bei Befestigung des Montageteils 25 der erfindungsgemäßen Abfangvorrichtung 24 am Dichtkörper 22 der Kabelmuffe 20 die Radialposition und/oder Umfangsposition des Montageteils 25 am Dichtkörper 22 innerhalb der durch die Abmessungen der Langlöcher 28 vorgegebenen Grenzen frei einstellbar.

Die Montagefüße 27 des Montageteils 25 sind über einen U-förmigen Bodenabschnitt 30 des Montageteils 25 miteinander verbunden, wobei im bevorzugten Ausführungsbeispiel gegenüber dem Bodenabschnitt 30 zwei Aufnahmeabschnitte 31 zur Abfangung jeweils eines Kabels 21 abgewinkelt sind. Die Aufnahmeabschnitte 31 verfügen über Halteenden 32, an welchen die anzufangenden Kabel 21 anliegen und an welchen die anzufangenden Kabel 21 über Kabelschellen 33 befestigt werden können.

Benachbart zu den Halteenden 32 der Aufnahmeabschnitte 31 erstreckt sich zwischen den Aufnahmeabschnitten 31 des Montageteils 25 ein Quersteg 34, welcher der Stabilisierung bzw. Versteifung des Montageteils 25 im Bereich der Aufnahmeabschnitte 31 dient.

Das Schieberteil 26 ist am Montageteil 25 formschlüssig geführt, und zwar derart, dass das Schieberteil 26 bei am Dichtkörper 22 der Kabelmuffe 20 montiertem bzw. befestigtem Montageteil 25 innerhalb vorgegebener Grenzen gegenüber dem Montageteil 25 translatorisch verschoben werden kann. So verfügt das Schieberteil 26 ebenso wie das Montageteil 25 über einen Bodenabschnitt 35, wobei ein Steg 36 des Bodenabschnitts 35 des Schieberteils 26 in einer Ausnehmung 37 innerhalb des Bodenabschnitts 30 des Montageteils 25 geführt ist. Eine abgewinkelte Lasche 38 des Stegs 36 begrenzt dabei, wie einem Vergleich der Fig. 2 und 3 entnommen werden kann, den maximalen Verstellweg des Schieberteils 26 relativ zum Montageteil 25. So zeigt Fig. 2 die Anfangvorrichtung 24 mit zusammengedrücktem Schieberteil 26 und Montageteil 25, in Fig. 3 sind Schieberteil 26 und Montageteil 25 maximal auseinander gezogen.

Das Schieberteil 26 verfügt ebenso wie das Montageteil 25 im bevorzugten Ausführungsbeispiel über zwei gegenüber dem Bodenabschnitt 35 abgewinkelte Aufnahmeabschnitte 39 zur Abfangung von Kabeln, wobei auch die Aufnahmeabschnitte 39 des Schieberteils 26 über Halteenden 40 verfügen, an welchen abzufangende Kabel 21 anliegen und an welchen die Kabel 21 über Kabelschellen 33 befestigt werden können.

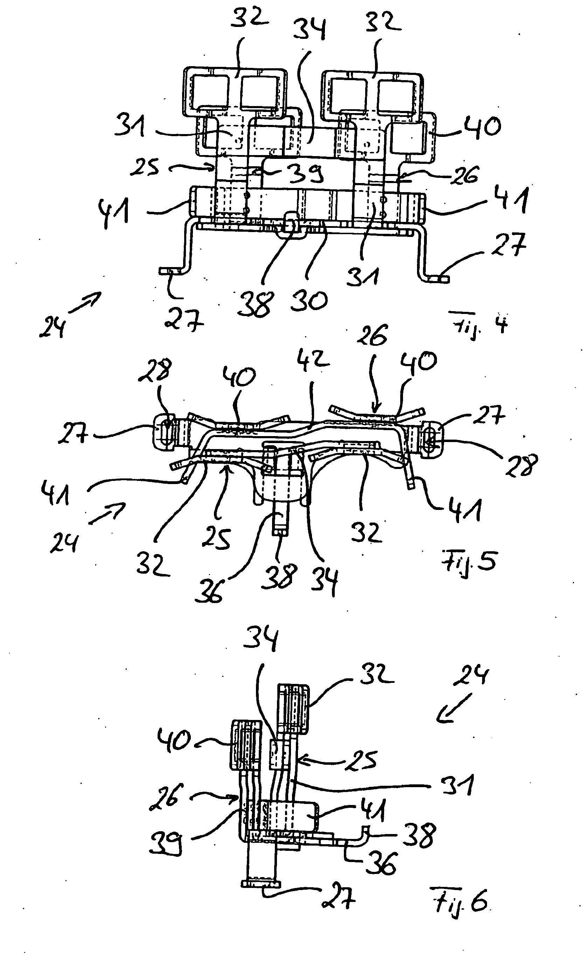

Wie bereits erwähnt, ist das Schieberteil 26 gegenüber dem Montageteil 25 ausschließlich translatorisch verschiebbar und daher gegenüber einer Verkippung bzw. Verdrehung relativ zum Montageteil 25 gesichert. Um diese Verkippsicherung bzw. Verdrehsicherung des Schieberteils 26 gegenüber dem Montageteil 25 zu realisieren, sind an die Montagefüße 27 angrenzende bzw. benachbarte Bereiche des Bodenabschnitts 30 des Montageteils 25 zwischen dem Bodenabschnitt 35 des Schieberteils 26 und abgewinkelten Laschen 41 eines sich zwischen den Aufnahmeabschnitten 31 erstreckenden Querstegs 42 des Schieberteils 26 geführt. Wie insbesondere Fig. 4 und 11 entnommen werden kann, ist zwischen den abgewinkelten Laschen 41 des Querstegs 42 und dem Bodenabschnitt 35 des Schieberteils 26 ein Freiraum 43 ausgebildet, in welchen der Bodenabschnitt 30 des Montageteils 24 eingreift bzw. in welchem derselbe geführt ist.

Zur Abfangung mehrerer Kabel an der erfindungsgemäßen Abfangvorrichtung wird so vorgegangen, dass die Abfangvorrichtung 24 über das Montageteil 25 im Bereich des Dichtkörpers 22 der Kabelmuffe 20 befestigt wird, wobei hierzu das Montageteil 25 hinsichtlich dessen Radialposition und Umfangsposition relativ zum Dichtkörper 22 derart ausgerichtet wird, dass die Halteenden 32 der Aufnahmeabschnitte 31 des Montageteils 25 an die Außendurchmesser der an denselben abzufangenden Kabel angepasst sind. Nach entsprechender Ausrichtung werden die Befestigungselemente 29 fest angezogen, so dass die Umfangsposition sowie Radialposition des Montageteils 25 relativ zum Dichtkörper 22 der Kabelmuffe 20 fixiert ist. Sodann wird bei am Dichtkörper 22 fixiertem Montageteil 25 das Schieberteil 26 der erfindungsgemäßen Abfangvorrichtung 24 relativ zum Montageteil 25 translatorisch verschoben, um auch die Halteenden 40 der Aufnahmeabschnitte 39 des Schieberteils 26 an die Außendurchmesser der an denselben abzufangenden Kabel anzupassen. Wie bereits erwähnt, kann dabei das Schieberteil 26 nur translatorisch relativ zum Montageteil 25 der Abfangvorrichtung 24 verschoben werden, ein Verkippen bzw. Verdrehen des Schieberteils 26 relativ zum Montageteil 25 ist hingegen nicht möglich.

Das Ausrichten des Montageteils 25 relativ zum Dichtkörper 22 sowie das Ausrichten des Schieberteils 26 relativ zum Montageteil 25 ist innerhalb vorgegebener Grenzen jeweils stufenlos möglich. Die Grenzen der Ausrichtung des Montageteils 25 relativ zum Dichtkörper 22 der Kabelmuffe werden dabei durch die Abmessungen der Langlöcher 28 innerhalb der Montagefüße 27 definiert, die Verschiebung des Schieberteils 26 relativ zum Montageteil 25 wird durch die umgebogene Lasche 38 des Stegs 26 begrenzt.

Obwohl im gezeigten Ausführungsbeispiel nicht dargestellt, kann nach Ausrichtung des Schieberteils 26 relativ zum Montageteil 25 die Relativposition zwischen denselben über ein Feststellelement fixiert werden.

Mit Hilfe der erfindungsgemäßen Abfangvorrichtung können mehrere Kabel gegenüber einer Zugbeanspruchung, Torsionsbeanspruchung sowie Biegebeanspruchung abgefangen werden, wobei die erfindungsgemäße Abfangvorrichtung dabei an die Außendurchmesser der abzufangenden Kabel innerhalb vorgegebener Grenzen stufenlos angepasst werden kann. Bezugszeichenliste
- 20: Kabelmuffe
- 21: Kabel
- 22: Dichtkörper
- 23: Einführabschnitt
- 24: Abfangvorrichtung
- 25: Montageteil
- 26: Schieberteil
- 27: Montagefuß
- 28: Langloch
- 29: Befestigungsmittel
- 30: Bodenabschnitt
- 31: Aufnahmeabschnitt
- 32: Haltende
- 33: Kabelschelle
- 34: Quersteg
- 35: Bodenabschnitt
- 36: Steg
- 37: Ausnehmung
- 38: Lasche
- 39: Aufnahmeabschnitt
- 40: Haltende
- 41: Laschen
- 42: Quersteg
- 43: Freiraum

## Patentansprüche

1. Vorrichtung zur Abfangung von Kabeln im Bereich eines Dichtkörpers einer Kabelmuffe, vorzugsweise ausserhalb eines von der Kabelmuffe begrenzten Innenraums derselben,
mit einem Montageteil (25), das Montagefüsse (27) und einen Aufnahmeabschnitt (31) zur Abfangung mindestens eines Kabels aufweist, wobei das Montageteil über die Montagefüsse (27) an dem Dichtkörper der Kabelmuffe derart befestigbar ist, dass eine Radialposition und/oder eine Umfangsposition des Montageteils am Dichtkörper innerhalb vorgegebener Grenzen einstellbar ist,
**dadurch gekennzeichnet, dass**
die Vorrichtung einen Schieberteil (26) aufweist,
wobei das Schieberteil (26) am Montageteil (25) derart formschlüssig geführt ist, dass das Schieberteil bei am Dichtkörper montiertem Montageteil innerhalb vorgegebener Grenzen gegenüber dem Montageteil translatorisch verschiebbar ist, und
wobei auch das Schieberteil einen Aufnahmeabschnitt (39) zur Abfangung mindestens eines Kabels aufweist.

2. Vorrichtung nach Anspruch 1, **dadurch gekennzeichnet, dass** in die Montagefüße (27) des Montageteils (25) Langlöcher (28) integriert sind, durch die sich zur Befestigung des Montageteils (25) am Dichtkörper der Kabelmuffe Befestigungsmittel erstrecken, wobei die Langlöcher (28) innerhalb vorgegebener Grenzen eine Ausrichtung des Montageteils (25) in Radialrichtung und/oder in Umfangsrichtung bei der Befestigung desselben am Dichtkörper der Kabelmuffe ermöglichen.

3. Vorrichtung nach Anspruch 1 oder 2, **dadurch gekennzeichnet, dass** das Schieberteil (26) am Montageteil (25) derart formschlüssig geführt ist, dass das Schieberteil (26) gegenüber dem Montageteil (25) innerhalb vorgegebener Grenzen ausschließlich translatorisch verschiebbar ist.

4. Vorrichtung nach einem oder mehreren der Ansprüche 1 bis 3, **dadurch gekennzeichnet, dass** ein mittlerer Steg (36) des Schieberteils (26) in einer Aufnehmung (37) des Montageteils (25) geführt ist, wobei eine Lasche (38) des Stegs (36) einen Anschlag bildet.

5. Vorrichtung nach einem oder mehreren der Ansprüche 1 bis 4, **dadurch gekennzeichnet, dass** sich an die Montagefüße (27) anschließende Bereiche eines Bodenabschnitts (30) des Montageteils (25) zwischen einem Bodenabschnitt (35) des Schieberteils (26) und abgewinkelten Laschen (41) eines Querstegs (42) des Schieberteils (26) geführt sind.

6. Vorrichtung nach einem oder mehreren der Ansprüche 1 bis 5, **dadurch gekennzeichnet, dass** sowohl das Montageteil (25) als auch das Schieberteil (26) jeweils zwei Aufnahmeabschnitte (31, 39) zur Abfangung jeweils mindestens eines Kabels aufweisen.

7. Vorrichtung nach Anspruch 6, **dadurch gekennzeichnet, dass** sich im Bereich des Montageteils (25) und/oder im Bereich des Schieberteils (26) zwischen den Aufnahmeabschnitten (31, 39) derselben jeweils mindestens ein Quersteg (34, 42) erstreckt.

## Claims

1. Apparatus for restraining cables in the region of a sealing body of a cable joint, preferably outside an interior thereof, which is delimited by the cable joint, with a fitting part (25) having fitting feet (27) and an accomodating section (31) for restraining at least one cable, it being possible for the fitting part to be fixed via fitting feet (27) on the sealing body of the cable joint in such a way that a radial position and/or a circumferential position of the fitting part on the sealing body can be adjusted within predetermined limits, **characterized in that** the apparatus has a slide part (26), the slide part (26) being guided in an interlocking manner on the fitting part (25) in such a way that the slide part is capable of being displaced translatorially with respect to the fitting part when the fitting part is fitted on the sealing body within predetermined limits, and the slide part also having an accommodating section (39) for restraining at least one cable.

2. Apparatus according to Claim 1, **characterized in that** slots (28) are integrated in the fitting feet (27) of the fitting part (25), through which slots fixing means extend so as to fix the fitting part (25) on the sealing body of the cable joint, the slots (28) making possible, within predetermined limits, an alignment of the fitting part (25) in the radial direction and/or in the circumferential direction when the latter is fixed on the sealing body of the cable joint.

3. Apparatus according to Claim 1 or 2, **characterized in that** the slide part (26) is guided in an interlocking manner on the fitting part (25) in such a way that the slide part (26) is capable of being displaced exclusively translatorially with respect to the fitting part (25) within predetermined limits.

4. Apparatus according to one or more of Claims 1 to 3, **characterized in that** a central web (36) of the slide part (26) is guided in a cutout (37) of the fitting part (25), a lug (38) of the web (36) forming a stop.

5. Apparatus according to one or more of Claims 1 to 4, **characterized in that** regions of a base section (30) of the fitting part (25) which adjoin the fitting feet (27) are guided between a base section (35) of the slide part (26) and bent-back lugs (41) of a transverse web (42) of the slide part (26).

6. Apparatus according to one or more of Claims 1 to 5, **characterized in that** both the fitting part (25) and the slide part (26) each have two accommodating sections (31, 39) for restraining in each at least one cable.

7. Apparatus according to Claim 6, **characterized in that** in each case at least one transverse web (34, 42) extends in the region of the fitting part (25) and/or in the region of the slide part (26) between the accommodating sections (31, 39) thereof.

## Revendications

1. Dispositif pour retenir des câbles dans la région d'un corps d'étanchéité d'un manchon de câble, de préférence en dehors d'un espace interne de celui-ci délimité par le manchon de câble,
comprenant une partie de montage (25) qui présente des pieds de montage (27) et une portion de réception (31) pour retenir au moins un câble, la partie de montage pouvant être fixée par le biais des pieds de montage (27) sur le corps d'étanchéité du manchon de câble de telle sorte qu'une position radiale et/ou une position périphérique de la partie de montage sur le corps d'étanchéité puisse être ajustée dans des limites prédéterminées,
**caractérisé en ce que**
le dispositif présente une partie coulissante (26),
la partie coulissante (26) étant guidée sur la partie de montage (25) avec engagement par coopération de forme de telle sorte que la partie coulissante puisse être déplacée en translation lorsque la partie de montage est montée sur le corps d'étanchéité, dans des limites prédéterminées, et
la partie coulissante présentant aussi une portion de réception (39) pour retenir au moins un câble.

2. Dispositif selon la revendication 1, **caractérisé en ce que** des trous oblongs (28) sont intégrés dans les pieds de montage (27) de la partie de montage (25), à travers lesquels s'étendent des moyens de fixation pour la fixation de la partie de montage (25) sur le corps d'étanchéité du manchon de câble, les trous oblongs (28) permettant, dans des limites prédéterminées, une orientation de la partie de montage (25) dans la direction radiale et/ou dans la direction périphérique lors de la fixation de cette dernière sur le corps d'étanchéité du manchon de câble.

3. Dispositif selon la revendication 1 ou 2,
**caractérisé en ce que** la partie coulissante (26) est guidée sur la partie de montage (25) par engagement par coopération de forme de telle sorte que la partie coulissante (26) puisse être déplacée par rapport à la partie de montage (25) dans des limites prédéterminées exclusivement en translation.

4. Dispositif selon l'une quelconque ou plusieurs des revendications 1 à 3, **caractérisé en ce qu'**une nervure centrale (36) de la partie coulissante (26) est guidée dans un évidement (37) de la partie de montage (25), une patte (38) de la nervure (26) formant une butée.

5. Dispositif selon l'une quelconque ou plusieurs des revendications 1 à 4, **caractérisé en ce que** des régions d'une portion de fond (30) de la partie de montage (25) se raccordant aux pieds de montage (27) sont guidées entre une portion de fond (35) de la partie coulissante (26) et des pattes coudées (41) d'une nervure transversale (42) de la partie coulissante (26).

6. Dispositif selon l'une quelconque ou plusieurs des revendications 1 à 5, **caractérisé en ce que** la partie de montage (25) ainsi que la partie coulissante (26) présentent à chaque fois deux portions de réception (31, 39) pour retenir à chaque fois au moins un câble.

7. Dispositif selon la revendication 6, **caractérisé en ce qu'**au moins une nervure transversale (34, 42) s'étend dans la région de la partie de montage (25) et/ou dans la région de la partie coulissante (26) entre les portions de réception (31, 39) de celles-ci.
